Europäisches Patentamt

European Patent Office

Office européen des brevets

(19)

(11) Numéro de publication: **0 222 642 B1**

(12) **FASCICULE DE BREVET EUROPEEN**

(45) Date de publication de fascicule du brevet:
26.06.91

(21) Numéro de dépôt: 86402244.7

(22) Date de dépôt: **10.10.86**

(51) Int. Cl.⁵: **B26D 3/28**, B26F 3/12,
B29C 67/22

(54) **Procédé de fabrication de maquettes de formes complexes, notamment en mousse.**

(30) Priorité: **11.10.85 FR 8515143**

(43) Date de publication de la demande:
**20.05.87 Bulletin 87/21**

(45) Mention de la délivrance du brevet:
**26.06.91 Bulletin 91/26**

(84) Etats contractants désignés:
**CH DE GB IT LI SE**

(56) Documents cités:
**EP-A- 0 088 034**    **AU-B- 509 642**
**BE-A- 878 626**    **DE-A- 3 237 907**
**DE-B- 1 270 788**    **FR-A- 2 479 073**
**NL-A- 7 002 474**    **US-A- 4 083 739**

(73) Titulaire: **Perrey, Charles**
**72, rue de Genève**
**F-73103 Aix les Bains Cédex(FR)**

(72) Inventeur: **Perrey, Charles**
**72 rue de Genève**
**F-73103 Aix Les Bains(FR)**
Inventeur: **Olivier, Gérard**
**10 boulevard Gaston Mallex**
**F-73100 Brison Saint Innocent(FR)**

(74) Mandataire: **Pinguet, André**
**Cabinet de Proprieté Industrielle CAPRI 28**
**bis, avenue Mozart**
**F-75016 Paris(FR)**

## Description

La présente invention a pour objet un procédé de fabrication de pièces de mousse de formes complexes, en vue de la réalisation de maquettes.

On connait déjà des procédés de fabrication de pièces à partir de blocs de mousse. Parmi eux, citons l'exécution de pièces par modelage artisanal, et l'exécution de pièces par usinage automatique par points. Le premier procédé est lent, et sa précision n'est pas toujours suffisante pour des applications industrielles, notamment lorsque la pièce à réaliser comporte des parties symétriques. La fabrication de pièces par une machine-outil qui usine par points un bloc de matériau à base de mousse est plus précise, surtout si elle est pilotée par un ordinateur, mais elle est très coûteuse notamment à cause du prix de la machine, de faible capacité car il est difficile par exemple de réaliser une maquette en grandeur nature d'une automobile avec une table de fraiseuse, et ne permet d'atteindre que des vitesses d'exécution de l'ordre de 50 à 100 mm2/mn.

D'autres procédés consistent à usiner un bloc de mousse par lignes, par exemple par découpage à l'aide d'un fil chaud, mais ne permettent pas d'obtenir directement une forme complexe correspondant notamment à une surface non développable.

Les documents DE-A-3 237 907 et FR-A-2 479 073 décrivent enfin des procédés dans lesquels une masse de matière est déformée avant d'être tranchee suivant une surface prédéterminée.

Si le premier se borne à envisager une application particulière, l'usinage de planches à voile, le second aboutit en revanche à des blocs de mousse découpés de façon plus variée. Le procédé correspondant consiste tout d'abord à comprimer la mousse entre une matrice comportant une large découpe centrale et un premier plateau ayant une forme, par exemple en creux, disposée pour se présenter en face de la découpe. Puis un second plateau est appliqué de l'autre côté de la matrice de façon à venir comprimer la masse de mousse extrudée par la découpe de la matrice. Le second plateau comporte une contreforme, par exemple en saillie, si bien que la mousse se retrouve pincée au niveau de la découpe entre les deux plateaux. C'est alors qu'un outil tranchant tel une scie est passé le long de la matrice. Lorsque les deux plateaux sont éloignés de cette dernière, un bloc de mousse est de la sorte libéré qui comporte un évidement. Si le contour de ce dernier peut être aussi complexe qu'un visage humain, son obtention dépend des forme et contre-forme utilisées. Or, le document s'en tient à une mise au point empirique. Le recours à des formes en bois aisément façonnables est en particulier recommandé afin de faciliter les rectifications à la suite d'essais non satisfaisants. Il est clair qu'un tel procédé ne saurait produire des blocs de mousse usinés avec la précision requise pour une maquette notamment.

Un des buts de la présente invention est de proposer un procédé de fabrication de pièces de mousse de formes complexes permettant de fournir plus rapidement à un bureau d'études des maquettes précises de dimensions importantes et dont les coûts soient moins eleves que ceux des maquettes réalisées selon les procédés de l'art antérieur

Selon la présente invention, un procédé de fabrication de maquettes de formes complexes à partir d'un bloc de mousse comprend les étapes suivantes;

a/ détermination, dans un repère cartésien à trois dimensions (Ox, Oy, Oz) préalablement choisi, de l'équation de la surface d'au moins une partie de l'enveloppe de la pièce à réaliser, sous la forme $Y = L(x,z)$, par la succession des etapes suivantes:

- détermination de la courbe du contour extérieur de la vue de profil, sous la forme $x = P(z)$;
- détermination de la courbe du contour extérieur de la vue de face, sous la forme $y = F(z)$;
- détermination du lieu des points de plus grande hauteur et de plus grande largeur décrits par la courbe du contour extérieur de la vue de face, dite courbe de l'inclinaison vue de sous la forme $x = IF(y,z)$, où $IF(y,z)$ est l'abscisse des points de plus grande largeur selon l'axe Oy dans la vue de profil ;
- détermination de quelques courbes de niveau $z_i$, vues de dessus, de la forme $y = L(x,z_i)$ ;
- déduction de l'équation $y = L(x,z)$;

b/ détermination de deux surfaces auxiliaires, l'une au moins de ces surfaces étant développable, permettant, par découpage d'une surface développable de ces deux surfaces auxiliaires, dite surface de découpage, dans le bloc de mousse préalablement conformé à l'autre surface, dite surface de cintrage, d'obtenir la surface recherchée;

c/ déformation dudit bloc de mousse selon la surface de cintrage, choisie en fonction des propriétés physiques de ladite mousse avantageusement de façon à ce que cette déformation soit élastique;

d/ découpage par un fil chaud du bloc de mousse ainsi déforme, suivant la surface de découpage;

e/ suppression des contraintes qui déformaient le bloc de mousse.

Selon une variante avantageuse de l'invention, le procédé comprend en outre le détourage et la sculpture de la pièce ainsi réalisée a l'aide d'un outil chaud auquel on imprime un mouvement de translation-rotation par rapport à cette pièce. On peut pour ce faire utiliser, par exemple, un dispositif analogue à une table de traçage de courbes sur papier pilotée par ordinateur dans laquelle l'outil chaud viendrait remplacer le crayon, et qui possèderait en outre une possibilité de commander le déplacement de l'outil selon un axe perpendiculaire au plan de travail, ainsi qu'une possibilité de commander la rotation de l'outil sur lui-même, autour d'un axe perpendiculaire au plan de travail.

Les vitesses d'avancement du fil chaud et de l'outil chaud sont avantageusement liées à la température de ces derniers.

Ces étapes du procédé permettent, grâce à l'utilisation d'un modèle mathématique approprié où chaque courbe est mise en équation sous la forme :

$$y = A.x (C + D.x + E.x2) + B,$$

de décrire chaque courbe ou tronçon de courbe à l'aide de trois paramètres, après un changement de repère ramenant l'équation précédente à :

$$y = x (C + D.x + E.X2).$$

Il n'est ainsi plus nécessaire de faire appel à des moyens de calcul capables d'inverser des grosses matrices.

Chaque tronçon de courbe est défini par cinq points.

Selon une autre variante avantageuse de l'invention, le procédé comprend en outre l'exécution ou le pilotage par ordinateur de tout ou partie des étapes de réalisation précédemment décrites ci-dessus

Lorsque la forme de la pièce à réaliser comporte des points singuliers difficiles à obtenir directement selon le procédé décrit ci-dessus, tels que, par exemple, des angles vifs rentrants, la forme est préalablement divisée en volumes élémentaires qui seront alors obtenus comme décrit ci-dessus avant d'être assemblés par collage.

Ladite mousse est avantageusement du P.V.C. expansé, ou du polyuréthane expansé lorsque la pièce doit présenter une résistance mécanique plus importante

La réalisation de l'invention peut se faire avec un dispositif comprenant notamment:

- une table de cintrage permettant de conformer un bloc de mousse à la courbe de cintrage;
- un moyen de translation et de rotation du bloc de mousse ainsi conformé par rapport au fil chaud;
- éventuellement, un moyen de translation et de rotation du fil chaud par rapport au bloc de mousse.

D'autres caractéristiques et avantages de la présente invention apparaîtront mieux à la lecture de la description suivante donnée à titre d'exemples non limitatifs des formes possibles de réalisation de l'invention, en regard des dessins ci-joints et qui fera bien comprendre comment l'invention peut être réalisée.

Sur les dessins:

- les Figures 1a, 1 b, 1c et 1d illustrent les différentes étapes du procédé de l'invention appliquées sur un bloc parallélépipèdique droit de mousse, pour son découpage selon une surface non développable;
- les Figures 2a et 2b illustrent d'autres étapes du procédé de l'invention appliquées sur un bloc de mousse prédécoupé selon une surface non développable, pour son détourage.

La Figure la représente un bloc parallélépipèdique droit de mousse 1 sur lequel le procédé de l'invention va être appliqué pour la fabrication d'une pièce dont la forme est définie partiellement par une surface non développable.

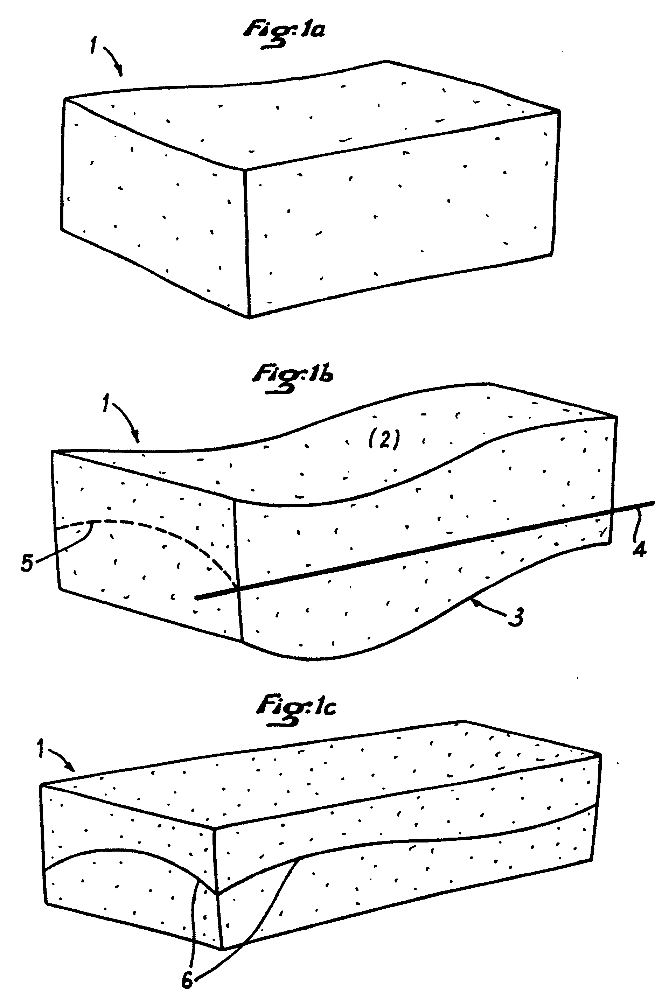

Sur la Figure 1b, le bloc de mousse a été cintré suivant une première surface 2 dont on voit un des profils latéraux 3, et on s'apprête à le découper à l'aide d'un fil chaud symbolisé en 4 selon une surface développable dont un des profils latéraux 5 apparaît sur la Figure.

Sur la Figure 1c, le découpage a eu lieu et le bloc de mousse ainsi découpé a été libéré des contraintes mécaniques qui le maintenaient cintré selon la surface 2 pendant la phase de découpage. La marque de la découpe 6 apparaît sur les faces latérales du bloc de mousse.

La Figure 1d représente les deux parties 7 et 8 du bloc de mousse ainsi obtenues. La surface usinée 9 de l'une des parties 8 est une surface non développable qu'il n'aurait pas été possible d'obtenir en une seule découpe sans mettre en oeuvre le procédé de la présente invention. De plus, on dispose également d'une partie 7 qui pourrait éventuellement servir de moule pour l'autre partie 8, puisque par réalisation selon le procédé de la présente invention, sa face usinée est complémentaire de la surface 9.

Le procédé permet l'usinage d'une forme à des vitesses de l'ordre de 2500 à 35000 mm2/mn, à comparer aux 50 à 100 mm2/mn de l'art antérieur. La vitesse d'exécution est généralement d'autant plus importante que la pièce à réaliser est grande.

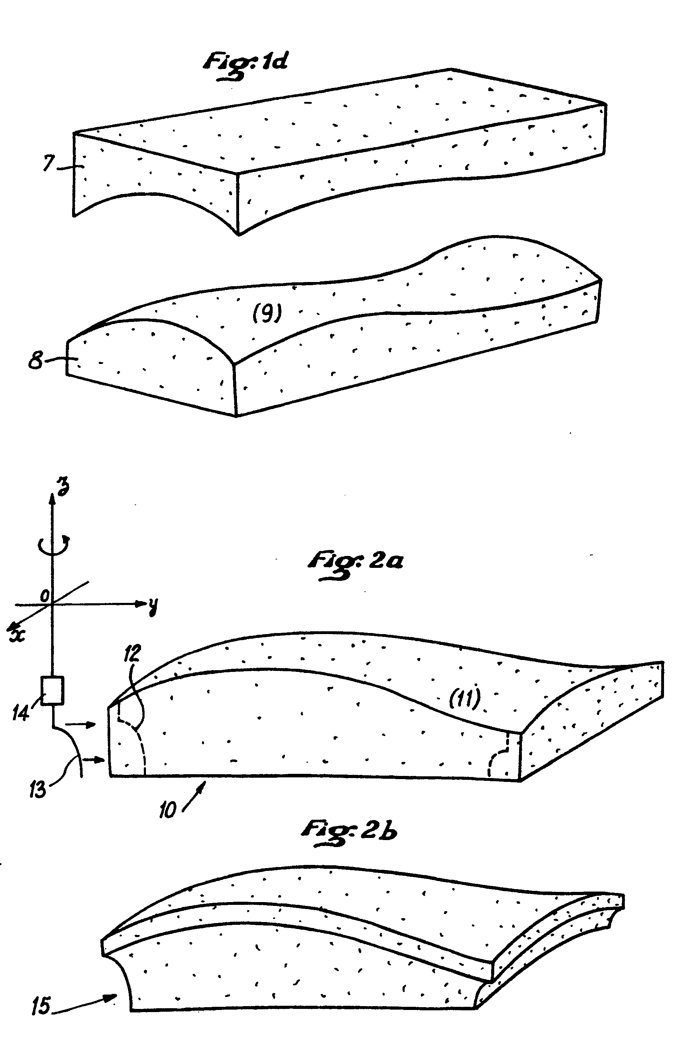

Sur la Figure 2a, un bloc de mousse 10 dont une des faces 11 a été usinée selon les premières étapes du procédé va être détouré selon une surface dont on voit un des profils latéraux en 12 à l'aide d'un outil chaud 13 monté sur une tête porte-outil 14 qui peut se déplacer selon les directions Ox, Oy, Oz, et autour de l'axe Oz.

Sur la Figure 2b, le détourage a été effectué, une nouvelle pièce 15 est obtenue, qui elle-même peut à son tour être usinée sur son autre face. L'ordre de ces deux opérations peut bien entendu être changé sans sortir du cadre de l'invention.

Il va de soit que l'invention n'est pas limitée au mode de réalisation décrit et représenté et pourrait être modifié notamment par substitution d'équivalents techniques. Par exemple, le fil chaud pourrait être remplacé par une boucle sans fin de fil abrasif en mouvement permanent.

## Revendications

1. Procédé de fabrication de maquettes de formes complexes a partir d'un bloc de mousse (1), comprenant les étapes suivantes :

   a/ détermination, dans un repère cartésien à trois dimensions (Ox, Oy,Oz) préalablement choisi, de l'équation de la surface d'au moins une partie de l'enveloppe de la pièce à réaliser, sous la forme Y = L(x,z), par la succession des étapes suivantes :

   - détermination de la courbe du contour extérieur de la vue de profil , sous la forme x = P(z) ;
   - détermination de la courbe du contour extérieur de la vue de face, sous la forme y = F(z) ;
   - détermination du lieu des points de plus grande hauteur et de plus grande largeur décrits par la courbe du contour extérieur de la vue de face, dite courbe de l'inclinaison vue de face, sous la forme x = IF(y,z), où IF-(y,z) est l'abscisse des points de plus grande largeur selon l'axe Oy dans la vue de profil ;
   - détermination de quelques courbes de niveau $Z_i$, vues de dessus de la forme y = L(x,$z_i$)
   - déduction de l'équation y = L(x,z) ;

   b/ détermination de deux surfaces auxiliaires, l'une au moins de ces surfaces étant développable, permettant, par découpage d'une surface développable de ces deux surfaces auxiliaires, dite surface de découpage, dans le bloc de mousse préalablement conformé à l'autre surface, dite surface de cintrage, d'obtenir la surface recherchée ;

   c/ déformation dudit bloc de mousse selon la surface de cintrage, choisie en fonction des propriétés physiques de ladite mousse avantageusement de façon à ce que cette déformation soit élastique ;

   d/ découpage par un fil chaud (4) du bloc de mousse ainsi déformé, suivant la surface de découpage ;

   e/ suppression des contraintes qui déformaient le bloc de mousse.

2. Procédé selon la revendication 1, caractérisé en ce qu'il comprend en outre le détourage et la sculpture de la pièce ainsi réalisée à l'aide d'un outil chaud (12) auquel on imprime un mouvement de translation-rotation.

3. Procédé selon l'une quelconque des revendications précédentes, caractérisé en ce qu'il comprend en outre l'exécution ou le pilotage par ordinateur de tout ou partie des etapes de sa mise en oeuvre

4. Procédé selon l'une quelconque des revendications précédentes, caractérisé en ce qu'il comprend en outre l'asservissement de la vitesse de découpage en fonction de la température du fil chaud ou de l'outil chaud.

5. Procédé selon l'une quelconque des revendications précédentes, caractérisé en ce que ladite mousse est du P.V.C expansé ou du polyuréthane expansé.

## Claims

1. Process for the manufacture of models of complex shapes from a foam block (1), comprising the following steps:

   a. determination, in a preselected three-dimensional system of cartesian coordinates (Ox, Oy, Oz), of the equation of the surface of at least one portion of the envelope of the part to be produced, in the form Y = L(x,z), by the following series of steps:

   - determination of the curve of the exterior contour of the profile view, in the form x = P(z);
   - determination of the curve of the exterior contour of the front view, in the form y = F(z);
   - determination of the locus of the points of greatest height and greatest width described by the curve of the exterior contour of the front view, called the front-view inclination curve, in the form x = IF(y,z), where IF(y,z) is the abscissa of the points of greatest width on the axis Oy in the side-face view;

- determination of some curves of level $Z_i$, viewed in plan, in the form $y = L(x,z_i)$;
- deduction of the equation $y = L(x,z)$;

b. determination of two auxiliary surfaces, at least one of these surfaces being capable of being developed, allowing the required surface to be obtained by cutting a developable surface of these two auxiliary surfaces, called the cutting surface, in the foam block previously conformed to the other surface, called the surface of curvature;

c. deformation of said foam block at the surface of curvature, chosen according to the physical properties of said foam, advantageously so that said deformation is elastic;

d. cutting a hot wire (4) of the foam block thus deformed, along the cutting surface;

e. removal of the stresses deforming the foam block.

2. Process according to Claim 1, characterized in that it also comprises the curving and sculpture of the part thus obtained by means of a hot tool (12) to which a translation-rotation movement is imparted.

3. Process according to either of the preceding claims, characterized in that it also comprises the execution or control by computer of all or part of the steps of the process.

4. Process according to any one of the preceding claims, characterized in that it also comprises the regulation of the cutting speed as a function of the temperature of the hot wire or hot tool.

5. Process according to any one of the preceding claims, characterized in that said foam is expanded PVC or expanded polyurethane.

## Ansprüche

1. Verfahren zur Herstellung von Modellen mit komplexen Formen ausgehend von einem Schaumstoffblock (1), das die folgenden Verfahrensschritte aufweist:

   a/ Bestimmung, in einem vorher ausgewählten dreidimensionalen kartesischen Koordinatensystem (Ox, Oy, Oz), der Gleichung der Oberfläche mindestens eines Teils der Hülle des herzustellenden Stücks, in der Form $Y = L(x,z)$, durch die Aufeinanderfolge der folgenden Schritte:
   - Bestimmung, in der Form $x = P(z)$, der Kurve des äußeren Umfangs der Profilansicht;
   - Bestimmung, in der Form $y = F(z)$, der Kurve des äußeren Umfangs der Vorderansicht;
   - Ortsbestimmung, in der Form $x = IF(y,z)$, der Punkte größerer Höhe und größerer Breite, die von der Kurve des äußeren Umfangs der Vorderansicht, genannt Vorderansicht-Neigungskurve, beschrieben werden, wobei $IF(y,z)$ die Abszisse der Punkte größerer Breite gemäß der Achse Oy in der Profilansicht ist;
   - Bestimmung einiger Kurven der Höhe $z_j$, von oben gesehen, der Form $y = L(x,z_j)$;
   - Ableitung der Gleichung $y = L(x,z)$;

   b/ Bestimmung zweier Hilfsoberflächen, wobei mindestens eine dieser Oberflächen abwickelbar ist, was es erlaubt, durch Ausschneiden einer abwickelbaren Oberfläche dieser beiden Hilfsoberflächen, genannt Ausschneideoberfläche, in dem vorher der anderen Oberfläche, Krümmungsoberfläche genannt, angeglichenen Schaumstoffblock, die gewünschte Oberfläche zu erhalten;

   c/ Verformung dieses Schaumstoffblocks gemäß der Krümmungsoberfläche, die ausgewählt ist in Abhängigkeit von den physikalischen Eigenschaften des Shaumstoffs, vorzugsweise so, daß diese Verformung elastisch ist;

   d/ Auschneiden mit einem heißen Faden (4) des so verformten Schaumstoffblocks entlang der Ausschneideoberfläche;

   e/ Beseitigung der Beanspruchungen, die den Schaumstoffblock verformten.

2. Verfahren nach Anspruch 1, dadurch gekennzeichnet, daß es weiter das Beschneiden und das Schnitzen des so hergestellten Stücks mit Hilfe eines heißen Werkzeugs (12) aufweist, dem man eine Translations-Rotations-Bewegung verleiht.

3. Verformung nach einem beliebigen der vorhergehenden Ansprüche, dadurch gekennzeichnet, daß es weiter die Computerdurchführung oder -steuerung aller oder eines Teils seiner Ausführungsschritte aufweist.

4. Verfahren nach einem beliebigen der vorhergehenden Ansprüche, dadurch gekennzeichnet, daß es weiter die Regelung der Ausschneidegeschwindigkeit in Abhängigkeit von der Temperatur des heißen Fadens oder des heißen Werkzeugs einschließt.

5. Verfahren nach einem beliebigen der vorhergehenden Ansprüche, dadurch gekennzeichnet, daß der Schaumstoff expandiertes PVC oder expandiertes Polyurethan ist.

Fig. 1a

Fig. 1b

Fig. 1c

EP 0 222 642 B1

Fig. 1d

7

(9)

8

3

0   y

x

Fig. 2a

12

14

(11)

13

10

Fig. 2b

15

8